# NEUE EUROPÄISCHE PATENTSCHRIFT

(11) **EP 1 386 983 B2**
(45) Veröffentlichungstag und Bekanntmachung des Hinweises auf die Entscheidung über den Einspruch: **09.06.2010**
(45) Hinweis auf die Patenterteilung: 23.06.2004
(21) Anmeldenummer: 02017253.2
(22) Anmeldetag: 31.07.2002
(51) Int. Cl.: C23F 15/00

(54) **Keramische Beschichtung für Verbrennungskessel**
Ceramic coating for a boiler
Revêtement en céramique pour une chaudière

(43) Veröffentlichungstag der Anmeldung: 04.02.2004
(73) Patentinhaber: ITN NANOVATION GMBH, 66117 Saarbrücken (DE); ESK Ceramics GmbH & Co.KG, 87437 Kempten (DE)
(72) Erfinder: Binkle, Dr., Olaf, 66459 Kirkel (DE); Faber, Dr., Stefan, 66132 Saarbrücken (DE); Nonninger, Dr., Ralph, 66123 Saarbrücken (DE); Volz, Romeo, 66787 Wadgassen (DE); Schwetz, Karl, Dr., 87477 Sulzberg (DE); Engler, Martin, Dr., 87439 Kempten (DE); Schmidt, Helmut, Prof. Dr., 66130 Saarbrücken (DE); Aslan, Mesut, Dr., 66989 Höheischweiler (DE); Drumm, Robert, 66113 Saarbrücken (DE); Nair, Hareesh, Dr., 66125 Saarbrücken (DE); Endres, Klaus, Dr., 66450 Sulzbach (DE); Reinhard, Bernd, Dr., 66663 Merzig-Brotdorf (DE)
(74) Vertreter: Kohler Schmid Möbus

(56) Entgegenhaltungen:
- EP-A- 0 420 187
- EP-A- 1 122 506
- DE-A- 2 613 588
- DE-A- 3 046 412
- DE-A- 4 411 862
- DE-A- 19 939 686
- DE-A1- 19 647 368
- DE-A1- 19 714 949
- JP-A- 03 038 254
- JP-A- 08 104 535
- JP-A- 08 183 906
- JP-A- 57 168 745

## Beschreibung

Die Erfindung betrifft ein Verfahren zur Herstellung einer keramischen Beschichtung von metallischen und/oder keramischen Oberflächen und Produkten in Reaktoren, Prozeßanlagen und Verbrennungsanlagen, wobei man auf die metallische und/oder keramische Oberfläche oder das Produkt eine Mischung aus feinteiligem Bornitrid und einem anorganischen Bindermittel mit einer mittleren Teilchengröße im Nanometerbereich und mindestens einem Lösungsmittel aufträgt und die aufgetragene Mischung durch Erhitzen zu einer Beschichtung einbrennt.

Die Erfindung betrifft weiterhin eine keramische Beschichtung von metallischen und/oder keramischen Oberflächen in Reaktoren, Prozeßanlagen und Verbrennungsanlagen, die eine Schmelze oder ein Sinterprodukt aus feinteiligem Bornitrid und mindestens einem anorganischen Bindemittel einer mittleren Teilchengröße im Nanometerbereich enthält.

In Reaktoren und Verbrennungsanlagen, bevorzugt in Müllverbrennungsanlagen und Prozeß- und Industrieöfen enthalten Kessel- und Ofenräume eine feuerfeste Wandkonstruktion, um den eigentlichen Kesselraum von den Rohraggregaten zu trennen. Dies ist nötig, um die aus Stahl gefertigte Rohrwand vor hohen Temperaturen und Angriffen durch korrosive Gase und vor allem durch korrosive Feststoffe zu schützen.

Die zu schützenden Stahlrohraggregate werden üblicherweise mit z.B. Rohrwandplatten bzw. feuerfesten Massen, Betonen oder Steinen verkleidet und die Zwischenräume, wie in der deutschen Patentanmeldung 102 06 607.8 beschrieben, mit Beton vergossen, mit Massen verklebt oder mit Luft beaufschlagt. Diese Rohrwandverkleidungen sind keramische Produkte, insbesondere SiC-Platten, Steine und keramische Massen.

In bestimmten Bereichen der Reaktoren, Verbrennungs- und Abhitzekessel ist es jedoch nicht möglich, die Stahlrohraggregate durch das Aufbringen von Rohrwandplatten oder Massen bzw. Beton zu schützen. Um auch hier dem korrosiven Angriff von Schadgasen entgegenzuwirken, wird der Stahl durch Auftragschweißen von Legierungen (sog. Cladding) geschützt. Die Cladding-Arbeiten sind sehr aufwendig und insbesondere in bestehenden Kesseln nur mit hohem Aufwand nachträglich durchzuführen.

Während des Betriebes der Reaktoren und Kessel, insbesonder in Müllverbrennungsanlagen, scheiden sich auf den keramischen Rohrwandplatten, Massen oder Steinen, wie auch auf den aufgeschweißten Legierungen oder Stahlrohren korrosive Feststoffe und Asche ab, die den Wärmeübergang von Brennraum zu Rohrwand hemmen. Diese Abscheidungen müssen in regelmäßigen Abständen entfernt werden, entweder während des Betriebs durch Wasserstrahlen oder häufiger bei Betriebsstillstand durch Sandstrahlen, Bürsten usw. Beide Verfahren sind sehr aufwendig und mit hohen Kosten verbunden. Die Reinigung im Betriebsstillstand erfordert neben einer hohen Ausfallzeit der Anlage auch höchste Sicherheitsmaßnahmen für den Reinigungsdienst.

Oberflächen, die eine schmutzabweisende Wirkung besitzen, bzw. die die Anhaftung von Feststoffen verhindern, werden als Easy-to-clean-Oberflächen (Niederenergieoberflächen durch Ausnutzen des Tefloneffektes) oder als Lotus-Oberflächen (Mikrostrukturierung von Pflanzen) bezeichnet. Diese Beschichtungen sind im Stand der Technik bekannt; da aber alle diese Beschichtungen ein organisches Grundgerüst besitzen, sind diese Schichten nicht hochtemperaturstabil und können im vorliegenden Fall nicht eingesetzt werden.

Die EP 0 420 187 A2 offenbart ein Verfahren zur Herstellung eines keramischen Films, wobei eine Lösung mit keramischen Bestandteilen gekocht wird und ein Basismaterial in diese Lösung eingetaucht wird. Die keramischen Bestandteile haben bevorzugt eine Größe zwischen 0.2 und 5000 µm.

Die DE 199 39 686 A1 offenbart ein Verfahren zur Herstellung korrosionsschützender Überzüge auf metallischen Werkstoffen unter Verwendung nonoteiliger Pulver von Metallen oder Oxiden.

In der DE 30 46 412 A1 ist ein Verfahren zur Hochtemperaturbehandlung von kohlenwasserstoffhaltigen Materialien beschrieben. Dabei wird eine Oberfläche einer Anlage dem kohelnwasserstoffhaltigen Material ausgesetzt, wobei die Oberfläche unter anderem mit Bornitrid beschichtet wird.

Die der vorliegenden Erfindung zugrundeliegenden Aufgaben liegen darin, eine Beschichtung sowohl für die Stahlrohraggregate direkt als auch für die feuerfesten Rohrwandverkleidungen zu finden, die die beschriebenen Anhaftungen deutlich verringert und somit z.B. einen auf Dauer gleichmäßigen Wärmeübergang gewährleistet. Bei dem direkten Auftrag auf die Stahlrohraggregate muss die Schicht zusätzlich noch korrosionshemmende Eigenschaften aufweisen. Neben dem direkten Einbaubereich beschichteter Stahlrohre und feuerfester Stahlrohrverkleidungen sollte die keramische Schicht auch direkt im Kessel oder Reaktor auftragbar sein und sich durch die Temperaturen im betriebenen Kessel verfestigen lassen, um so aufwändige Reparaturarbeiten zu vermeiden. Diese Forderungen gehen weit über den Stand der Technik hinaus.

Diese Aufgabe wird erfindungsgemäß durch die beanspruchte keramische Beschichtung sowie das beanspruchte Verfahren zur Herstellung einer keramischen Beschichtung gelöst.

Durch einen keramischen Versatz, der feinteiliges Bornitrid-Pulver, vorzugsweise mit einer Primärteilchengröße zwischen 50nm und 50µm, insbesondere zwischen 500 nm und 5 µm, sowie ein anorganisches Bindersystem und mindestens ein Lösungsmittel enthält, gelingt die Herstellung eines Beschichtungsmaterials, das sich in dem Fachmann bekannter Art, insbesondere über Sprühen, Rakeln, Rollen, Tauchen oder Fluten sowohl auf metallische als auch auf keramische Oberflächen applizieren lässt. Oberhalb 400°C lässt sich eine so applizierte Schicht verfestigen. Wie bereits in der deutschen Patentanmeldung 101 27 494.7 beschrieben, können solche Schichten als Hochtemperatur-easy-to-clean-Schichten eingesetzt werden.

Die Easy-to-clean-Eigenschaft der erfindungsgemäßen Schicht beruht auf Anwesenheit von Bornitridpartikeln, die in der obersten Schicht der Beschichtung aufkonzentriert vorliegen. Als anorganisches Bindersystem dienen anorganische Nanoteilchen der Verbindungen Al₂O₃, AlO(OH), ZrO₂, Y-ZrO₂, TiO₂, Fe₂O₃ und SnO₂, oder eine Vorläuferverbindung hierfür, welche sich im Laufe des Herstellungsverfahrens zu Nanoteilchen einer der genannten Verbindungen umsetzt.

Als Lösungsmittel können alle dem Fachmann bekannten Alkohole und Wasser, bevorzugt aber Butoxyethanol, Ethanol und Wasser, und insbesondere bevorzugt eine Kombination dieser Lösungsmittel eingesetzt werden.

Das Aufbringen der Hochtemperatur-easy-to-clean-Schicht auf die metallische Rohrwand gelingt, indem z.B. der Stahlkessel zunächst, z.B. durch Sandstrahlen, gereinigt wird. Die erfindungsgemäße Beschichtung wird z. B. durch Sprühen oder Rollen aufgebracht. Anschließend wird der Kessel im Normalbetrieb erhitzt, so dass die Verfestigung der Schicht auf dem metallischen Substrat erfolgt. Da sich die erfindungsgemäße Schicht auch eignet, um beschädigte Stellen einer einmal applizierten Schicht im Stahlkessel nachträglich zu reparieren, können Reparaturarbeiten sehr einfach durchgeführt werden. Die angesprochenen Arbeiten können bei jeder Revision oder einfach nach Bedarf durchgeführt werden.

Das Aufbringen der Hochtemperatur-easy-to-clean-Schicht auf die keramisch abgekleidete Rohrwand gelingt ebenfalls, indem der Stahlkessel zunächst, z. B. durch Sandstrahlen, gereinigt und dann über Sprühen oder Rollen beschichtet wird. Auch hier reicht die normale Temperatur eines betriebenen Kessels aus, um die Schicht zu verdichten. Die Beschichtung der keramischen Platten kann aber auch bereits bei der Herstellung, also bei dem Brand der keramischen Platten, Steine oder Massen, insbesondere der SiC-Platten, erfolgen. Hierzu wird die erfindungsgemäße Schicht über Sprühen, Rakeln, Tauchen oder Rollen auf die Steine aufgetragen, bevor diese zur Fertigstellung gebrannt werden.

### Beispiel

Zu 700 g einer salpetersauren wässrigen Lösung werden portionsweise 100 g nanoskaliges Zr0₂ (Partikeldurchmesser 10 nm) gegeben, dann werden portionsweise unter Rühren 200 g Bornitrid zugesetzt. Der Schlicker wird ca. eine Stunde gründlich gerührt und dann mit 88 g einer 30 Gew.-%-igen PVA-Lösung versetzt. Die Keramiksuspension kann über einen Sprühprozess auf das Substrat appliziert werden. Nach Trocknen bei Raumtemperatur erfolgt die thermische Verfestigung.

Die erfinderische Tätigkeit der vorliegenden Erfindung kann z. B. in den hervorragenden Eigenschaften der vorgeschlagenen keramischen Beschichtung gesehen werden. Auch das hier vorgeschlagene Verfahren läuft überraschenderweise glatt und unter geringem Arbeitsaufwand ab, was hier anhand des nanoskaligen Zirkonoxids erläutert wird, sinngemäß aber auch für die anderen als Bindemittel vorgeschlagenen anorganischen Verbindungen gilt.

Die Nanoteilchen von Zirkonoxid besitzen eine große Oberfläche bis 250 m²/g und beim Produkt liegt die Hälfte ihrer Atome an der Oberfläche. Dies bedeutet, dass die Diffusion (die Ursache für das Sintern bzw. Brennen einer Keramik ist) deutlich früher beginnt, als die Diffusion von größeren Teilchen. Nanoskaliges Zirkonoxid ist bereits bei 1000°C, µm-großes Zirkonoxid erst bei 1600°C zu seiner theoretischen Dichte gesintert. Für einen Binder bedeutet dies, dass sich die Schicht bereits mehrere 100°C früher zu verfestigen beginnt.

## Patentansprüche

1. Verfahren zur Herstellung einer keramischen Beschichtung von metallischen und/oder keramischen Oberflächen und Produkten in Reaktoren, Prozeßanlagen und Verbrennungsanlagen, wobei man auf die metallischen und/oder keramischen Oberflächen oder das Produkt eine Mischung aus feinteiligem Bornitrid, mindestens einem anorganischen Bindemittel mit einer mittleren Teilchengröße im Nanometerbereich, im wesentlichen enthaltend Al₂O₃, AIO(OH), ZrO₂, Y-ZrO₂, TiO₂, Fe₂O₃ und/oder SnO₂ oder eine Vorläuferverbindung hierfür, und mindestens einem Lösungsmittel und/oder Wasser aufträgt und die aufgetragene Mischung durch Erhitzen zu einer Beschichtung einbrennt.

2. Verfahren nach Anspruch 1, **dadurch gekennzeichnet, dass** man die Oberfläche von metallischen Rohrwänden, keramischen Rohrwandplatten, Steinen und Auskleidungsmassen in Reaktoren, Prozeßanlagen und Verbrennungsanlagen mit der Beschichtung versieht.

3. Verfahren nach Anspruch 2, **dadurch gekennzeichnet, dass** man die Oberflächen von Teilen von Müllverbrennungsanlagen mit der Beschichtung versieht.

4. Verfahren nach einem der Ansprüche 1 bis 3, **dadurch gekennzeichnet, dass** als anorganische Bindemittel eine metallorganische Verbindung eingesetzt wird.

5. Verfahren nach einem der Ansprüche 1 bis 4, **dadurch gekennzeichnet, dass** das anorganische Bindemittel einer mittleren Teilchengröße von < 100 nm, vorzugsweise < 50 nm, insbesondere < 20 nm aufweist.

6. Verfahren nach einem der Ansprüche 1 bis 5, **dadurch gekennzeichnet, dass** das Lösungsmittel im wesentlichen Ethanol, 1-Propanol, 2-Propanol, 2-Butoxyethanol und/oder Wasser enthält.

7. Verfahren nach Anspruch 6, **dadurch gekennzeichnet, dass** das Lösungsmittel eine Mischung aus Ethanol, 2-Butoxyethanol und Wasser enthält.

8. Verfahren nach einem der Ansprüche 1 bis 7, **dadurch gekennzeichnet, dass** man das Einbrennen der aufgetragenen Mischung durch Erhitzen im laufenden Betrieb von Reaktor, Prozeßanlage oder Verbrennungsanlage durchführt.

9. Verfahren nach einem der Ansprüche 1 bis 8, **dadurch gekennzeichnet, dass** man das Einbrennen der aufgetragenen Mischung vor Betriebsaufnahme von Reaktor, Prozeßanlage oder Verbrennungsanlage durch Erhitzen auf mindestens 400°C durchführt.

10. Verfahren zur Reparatur einer keramischen Beschichtung von metallischen und/oder keramischen Oberflächen und Produkten in Reaktoren, Prozeßanlagen und Verbrennungsanlagen, **dadurch gekennzeichnet, dass** man eine beschädigte Beschichtung durch teilweisen oder vollständigen Auftrag der Beschichtung auf die beschädigte Beschichtung nach mindestens einem der Ansprüche 1 bis 9 repariert.

11. Verfahren nach einem der Ansprüche 1 bis 10, **dadurch gekennzeichnet, dass** man die Mischung durch Spülen, Rollen, Tauchen und/oder Fluten aufträgt.

12. Keramische Beschichtung von metallischen und/oder keramischen Oberflächen in Reaktoren, Prozeßanlagen und Verbrennungsanlagen, enthaltend eine Schmelze oder ein Sinterprodukt aus feinteiligem Bornitrid und mindestens einem anorganischen Bindemittel einer mittleren Teilchengröße im Nanometerbereich, im wesentlichen enthaltend Al₂O₃, AIO(OH), ZrO₂, Y-ZrO₂, TiO₂, Fe₂O₃ und/oder SnO₂ oder eine Vorläuferverbindung hierfür.

13. Keramische Beschichtung nach Anspruch 12, erhältlich durch
a. Auftragen einer Mischung aus feinteiligem Bornitrid, mindestens einem anorganischen Bindemittel mit einer mittleren Teilchengröße im Nanometerbereich, im wesentlichen enthaltend Al₂O₃, AIO(OH), ZrO₂, Y-ZrO₂, TiO₂, Fe₂O₃ und/oder SnO₂ oder eine Vorläuferverbindung hierfür, und mindestens einem Lösungsmittel auf die metallische und/oder keramische Oberfläche und
b. Einbrennen der Mischung.

14. Keramische Beschichtung nach Anspruch 12 und/oder 13, **dadurch gekennzeichnet, dass** das anorganische Bindemittel eine mittlere Teilchengröße von < 100 nm, vorzugsweise < 50 nm, insbesondere < 20 nm aufweist.

15. Schmutzabweisende Beschichtung von metallischen und/oder keramischen Oberflächen in Reaktoren, Prozeßanlagen und Verbrennungsanlagen, erhältlich durch
a. Auftragen einer Mischung aus feinteiligem Bornitrid, mindestens einem anorganischen Bindemittel mit einer mittleren Teilchengröße im Nanometerbereich, im wesentlichen enthaltend Al₂O₃, AIO(OH), ZrO₂, Y-ZrO₂, TiO₂, Fe₂O₃ und/oder SnO₂ oder eine Vorläuferverbindung hierfür, und mindestens einem Lösungsmittel auf die metallische und/oder keramische Oberfläche und
b. Einbrennen der Mischung.

## Claims

1. Method for producing a ceramic coating of metallic and/or ceramic surfaces and products in reactors, process plants and combustion plants, wherein a mixture of finely divided boron nitride, at least one inorganic binding agent of medium particle size in the nanometer range, which substantially contains Al₂O₃, AlO(OH), ZrO₂, Y-ZrO₂, TiO₂, Fe₂O₃ and/or SnO₂ or an associated precursor compound, and at least one solvent and/or water is applied onto the metallic and/or ceramic surfaces or the product, and the applied mixture is burnt-in to form a coating through heating.

2. Method according to claim 1, **characterized in that** the surfaces of metallic pipe walls, ceramic pipe wall plates, bricks/stones and lining substances in reactors, process plants and combustion plants are provided with the coating.

3. Method according to claim 2, **characterized in that** the surfaces of parts of waste incinerators are provided with the coating.

4. Method according to any one of the claims 1 through 3, **characterized in that** an organometallic compound is used as inorganic binding agent.

5. Method according to any one of the claims 1 through 4, **characterized in that** the inorganic binding agent has an average particle size of <100nm, preferably <50nm, in particular <20nm.

6. Method according to any one of the claims 1 through 5, **characterized in that** the solvent contains substantially ethanol, 1-propanol, 2-propanol, 2-butoxyethanol and/or water.

7. Method according to claim 6, **characterized in that** the solvent contains a mixture of ethanol, 2-butoxyethanol and water.

8. Method according to any one of the claims 1 through 7, **characterized in that** burning-in of the applied mixture is carried out through heating during operation of the reactor, process plant or combustion plant.

9. Method according to any one of the claims 1 through 8, **characterized in that** burning-in of the applied mixture is carried out before operation start of the reactor, process plant or combustion plant through heating to at least 400°C.

10. Method of repairing a ceramic coating of metallic and/or ceramic surfaces and products in reactors, process plants and combustion plants, **characterized in that** a damaged coating is repaired by applying the coating onto part of the damaged coating or onto the overall damaged coating in accordance with at least one of the claims 1 trough 9.

11. Method according to any one of the claims 1 through 10, **characterized in that** the mixture is applied through rinsing, rolling, immersion and/or flooding.

12. Ceramic coating of metallic and/or ceramic surfaces in reactors, process plants and combustion plants, containing a molten mass or a sintered product of finely divided boron nitride and at least one inorganic binding agent of a medium particle size in the nanometer range substantially containing Al₂O₃, AlO(OH), ZrO₂, Y-ZrO₂, TiO₂, Fe₂O₃ and/or SnO₂ or an associated precursor compound.

13. Ceramic coating according to claim 12, which can be obtained through
a) application of a mixture of finely divided boron nitride, at least one inorganic binding agent of a medium particle size in the nanometer range substantially containing Al₂O₃, AlO(OH), ZrO₂, Y-ZrO₂, TiO₂, Fe₂O₃ and/or SnO₂ or an associated precursor compound, and at least one solvent onto the metallic and/or ceramic surface; and
b) burning-in of the mixture.

14. Ceramic coating according to claim 12 and/or 13, **characterized in that** the inorganic binding agent has a medium particle size of < 100nm, preferably <50nm, in particular <20nm.

15. Dirt-repellent coating of metallic and/or ceramic surfaces in reactors, process plants and combustion plants, which can be obtained through
a) application of a mixture of finely divided boron nitride, at least one inorganic binding agent of a medium particle size in the nanometer range substantially containing Al₂O₃, AlO(OH), ZrO₂, Y-ZrO₂, TiO₂, Fe₂O₃ and/or SnO₂ or an associated precursor compound, and at least one solvent onto the metallic and/or ceramic surface; and
b) burning-in of the mixture.

## Revendications

1. Procédé pour produire un revêtement céramique sur des surfaces et des produits métalliques et/ou céramiques dans des réacteurs, des installations de traitement et des installations de combustion, dans lequel on applique, sur les surfaces métalliques et/ou céramiques ou sur le produit, un mélange de nitrure de bore à fines particules, au moins un liant inorganique avec une taille moyenne de particule dans la plage des nanomètres, contenant essentiellement les composés Al₂O₃, AIO(OH), ZrO₂, Y-ZrO₂, TiO₂, Fe₂O₃, et/ou SnO₂ ou un composé précurseur de ceux-ci, et au moins un solvant et/ou de l'eau, et dans lequel on cuit le mélange appliqué, par échauffement pour former un revêtement.

2. Procédé selon la revendication 1, **caractérisé en ce que** l'on applique le revêtement sur la surface de parois tubulaires métalliques, de plaques de parois tubulaires céramiques, de briques et de masses de revêtement dans des réacteurs, des installations de traitement et des installations de combustion.

3. Procédé selon la revendication 2, **caractérisé en ce que** l'on applique le revêtement sur les surfaces de pièces d'installations d'incinération d'ordures.

4. Procédé selon l'une des revendications 1 à 3, **caractérisé en ce que** l'on emploie un composé organométallique à titre de liant inorganique.

5. Procédé selon l'une des revendications 1 à 4, **caractérisé en ce que** le liant inorganique présente une taille moyenne de particule inférieure à 100 nm, de préférence inférieure à 50 nm, en particulier inférieure à 20 nm.

6. Procédé selon l'une des revendications 1 à 5, **caractérisé en ce que** le solvant contient essentiellement les composants éthanol, 1-propanol, 2-propanol, 2-butoxyéthanol et/ou de l'eau.

7. Procédé selon la revendication 6, **caractérisé en ce que** le solvant contient un mélange d'éthanol, de 2-butoxyéthanol et d'eau.

8. Procédé selon l'une des revendications 1 à 7, **caractérisé en**
**ce que** l'on exécute la cuisson du mélange appliqué, par échauffement pendant le cours du fonctionnement du réacteur, de l'installation de traitement ou de l'installation de combustion.

9. Procédé selon l'une des revendications 1 à 8, **caractérisé en ce que** l'on exécute la cuisson du mélange appliqué, par échauffement à au moins 400°C, avant la mise en service du réacteur, de l'installation de traitement ou de l'installation de combustion.

10. Procédé pour réparer un revêtement céramique sur des surfaces et des produits métalliques et/ou céramiques dans des réacteurs, des installations de traitement et des installations de combustion, **caractérisé en ce que** l'on répare un revêtement endommagé par application partielle ou complète sur le revêtement endommagé, du revêtement selon au moins une des revendications 1 à 9.

11. Procédé selon l'une des revendications 1 à 10, **caractérisé en ce que** l'on applique le mélange par rinçage, roulement, immersion et/ou inondation.

12. Revêtement céramique de surfaces métalliques et/ou céramiques dans des réacteurs, des installations de traitement et des installations de combustion, contenant une masse en fusion ou un produit de frittage se composant de nitrure de bore à fines particules, et d'au moins un liant inorganique avec une taille moyenne de particule dans la plage des nanomètres, contenant essentiellement les composés Al₂O₃, AIO(OH), ZrO₂, Y-ZrO₂, TiO₂, Fe₂O₃, et/ou SnO₂, ou un composé précurseur de ceux-ci.

13. Revêtement céramique selon la revendication 12, pouvant être obtenu :
a) par application d'un mélange, se composant de nitrure de bore à fines particules, d'au moins un liant inorganique avec une taille moyenne de particule dans la plage des nanomètres et contenant essentiellement les composés Al₂O₃, AlO(OH), ZrO₂, Y-ZrO₂, TiO₂, Fe₂O₃, et/ou SnO₂, ou un composé précurseur de ceux-ci, et d'au moins un solvant, sur la surface métallique et/ou céramique ; et
b) par cuisson du mélange.

14. Revêtement céramique selon la revendication 12 et/ou 13, **caractérisé en ce que** le liant inorganique présente une taille moyenne de particule inférieure à 100 nm, de préférence inférieure à 50 nm, en particulier inférieure à 20 nm.

15. Revêtement anti-salissures sur des surfaces métalliques et/ou céramiques dans des réacteurs, des installations de traitement et des installations de combustion, pouvant être obtenu :
a) par application d'un mélange, se composant de nitrure de bore à fines particules, d'au moins un liant inorganique avec une taille moyenne de particule dans la plage des nanomètres, contenant essentiellement les composés Al₂O₃, AlO(OH), ZrO₂, Y-ZrO₂, TiO₂, Fe₂O₃, et/ou SnO₂, ou un composé précurseur de ceux-ci, et d'au moins un solvant, sur la surface métallique et/ou céramique ; et
b) par cuisson du mélange.
